**Europäisches Patentamt**

**European Patent Office**

**Office européen des brevets**

(19)

(11) Veröffentlichungsnummer: **0 270 161 B1**

(12) **EUROPÄISCHE PATENTSCHRIFT**

(45) Veröffentlichungstag der Patentschrift: **16.01.91**

(51) Int. Cl.⁵: **G 01 P 13/00**

(21) Anmeldenummer: **87202203.3**

(22) Anmeldetag: **06.11.87**

(54) **Flusswächter für ein diskontinuierlich nur in kleinen Mengen fliessendes Medium, z.B. Schmierstoff.**

(30) Priorität: **06.11.86 DE 3637917**

(43) Veröffentlichungstag der Anmeldung:
**08.06.88 Patentblatt 88/23**

(45) Bekanntmachung des Hinweises auf die
Patenterteilung:
**16.01.91 Patentblatt 91/03**

(84) Benannte Vertragsstaaten:
**AT BE CH DE ES FR GB GR IT LI NL SE**

(56) Entgegenhaltungen:
**DE-A-1 923 216**
**DE-A-3 506 430**
**FR-A-1 348 766**
**US-A-3 199 348**
**US-A-3 570 310**

(73) Patentinhaber: **Hörsch, Friedrich**
**Wüstenroterweg 21**
**D-7900 Ulm (DE)**

(72) Erfinder: **Hörsch, Friedrich**
**Wüstenroterweg 21**
**D-7900 Ulm (DE)**

(74) Vertreter: **Fay, Hermann, Dipl.-Phys. Dr. et al**
**Dr. Hermann Fay Dr. Joachim Dziewior**
**Ensingerstrasse 21 Postfach 17 67**
**D-7900 Ulm/Donau (DE)**

Courier Press, Leamington Spa, England.

## Beschreibung

Die Erfindung betrifft einen Flußwächter für ein diskontinuierlich in jeweils nur kleinen Mengen fließendes Medium, z.B. Schmierstoff, mit einer im Leitungszug für das Medium liegenden Leitungsverengung, einem das Medium an der Leitungsverengung erwärmenden Heizelement und einer die Temperatur des Mediums erfassenden Temperatursonde.

Derartige Flußwächter sind aus der DE—OS 35 06 430 bekannt und dienen der Überwachung kleiner und kleinster Mengen des Mediums, die zeitlich in Abständen den Leitungszug durchfließen und beispielsweise als Schmiermittel einem Lager oder dergl. zugeführt werden. Wird die Zufuhr durch Defekte welcher Art auch immer zu stark gedrosselt oder sogar vollständig unterbunden, entstehen Lagerschäden mit entsprechenden, meist hohen Folgekosten. Da andererseits die zugeführten Mengen häufig nur klein sein dürfen, um beispielsweise Funktionsbeeinträchtigungen an der Schmierstelle, Verschmutzungen im Lagerbereich durch austretenden überschüssigen Schmierstoff oder überhaupt unnötig großen Schmierstoffverbrauch zu vermeiden, sollen derartige Flußwächter möglichst empfindlich sein, d.h. schon auf den Fluß möglichst kleiner Mediummengen sicher ansprechen, indem diese kleinen und kleinsten Mediummengen an der Temperatursonde deutliche Temperaturänderungen erzeugen und dadurch elektrische Meßsignale entstehen lassen, die in einer nachgeschalteten Überwachungseinrichtung ausgewertet werden können.

Bei dem bekannten Flußwächter befindet sich die Leitungsverengung zwischen zwei im Leitungsquerschnitt liegenden Kammern. In der in Fließrichtung des Mediums vor der Leitungsverengung liegenden Kammer ist das Heizelement angeordnet, in der hinter der Leitungsverengung liegenden Kammer die Temperatursonde. Tritt ein Mediumfluß ein, gelangt erwärmtes Medium aus der ersten Kammer durch die Leitungsverengung hindurch an die in der zweiten Kammer befindliche Temperatursonde, die somit eine Temperaturerhöhung signalisiert. Je feiner die Leitungsverengung, desto empfindlicher ist die Anordnung, desto geringere Flußmengen des Mediums also werden angezeigt. Jedoch sind dieser Empfindlichkeit Grenzen gesetzt. Da nämlich das Heizelement und die Temperatursonde in Fließrichtung des Mediums hintereinander folgen, müssen sie ausreichend weit voneinander getrennt sein, damit nicht auch bei in der Leitungsverengung stillstehendem Medium vorhandene Wärmeleitungseffekte an der Temperatursonde Temperaturänderungen vortäuschen können, wie sie an sich nur bei fließendem Medium konvektiv entstehen sollen. Je größer dieser Abstand, eine um so größere Mediummenge muß mindestens fließen, damit das zuvor zwischen dem Heizelement und der Temperatursonde vorhandene kühlere Medium ausschließlich durch erwärmtes Medium aus der ersten Kammer ersetzt und dieses erwärmte Medium an der Temperatursonde überhaupt wirksam werden, also dort eine Temperaturerhöhung erzeugen kann. Geringe Flußmengen des Mediums entziehen sich somit der sicheren Überwachung.

Aus FR—A—1 348 766 ist eine Vorrichtung bekannt, bei der an einem im Zuge einer Leitung angeordneten Rohrstück, in dem beispielsweise der Fluß von Schmiermitteln überwacht werden soll, einander gegenüberliegend ein Heizelement und eine Temperatursonde angebracht sind. Das überwachte Rohrstück ist gegen den Rest der Leitung wärmeisoliert.

Bei einer aus US—A—3 199 348 bekannten Vorrichtung ist eine Temperatursonde, die zur Temperaturüberwachung eines in einer in Fließrichtung durchgehenden Leitung strömenden Fließmediums in einen Isolierkörper eingebettet, der eine Wärmeisolation der Temperatursonde gegenüber der Leitungswand bildet.

Der Erfindung liegt die Aufgabe zugrunde, einen Flußwächter der eingangs genannten Art so auszubilden daß die noch sicher erfaßbaren Flußmengen des Mediums besonders klein sein können, die Überwachungsempfindlichkeit hinsichtlich kleiner Mediummengen also wesentlich gesteigert werden kann.

Diese Aufgabe wird nach der Erfindung dadurch gelöst, daß das Heizelement und die Temperatursonde sich in der Leitungsverengung mit jeweils mit dem Medium in Berührung stehenden Wärmeübergangsflächen im wesentlichen quer zur Fließrichtung des Mediums gegenüber liegen und gegen die die Leitungsverengung bildende Leitungswand thermisch so isoliert sind, daß ein Wärmefluß zwischen dem Heizelement und der Temperatursonde über die Leitungswand wesentlich kleiner ist als der direkte Wärmefluß vom Heizelement zur Temperatursonde durch das in der Leitungsverengung befindliche Medium, und daß das Raumvolumen in der Leitungsverengung zwischen den Wärmeübergangsflächen nicht wesentlich größer ist als das Volumen der bei einem der diskontinuierlichen Fließvorgänge transportierten kleinsten Menge des Mediums, die noch erfaßt werden soll.

Bei dem erfindungsgemäßen Flußwächter erwärmt das Heizelement das Medium im wesentlichen nur im Bereich der Leitungsverengung und der sich gegenüberstehenden beiden Wärmeübergangsflächen. Bei in der Leitungsverengung stillstehendem Medium nimmt daher die Wärmeübergangsfläche der Temperatursonde mehr oder weniger bald die Temperatur der Wärmeübergangsfläche des Heizelements an. Die dabei zwischen beiden Wärmeübergangsflächen vorhandene Mediummenge kann je nach Größe und Abstand der Wärmeübergangsflächen und je nach Querschnitt der Leitungsverengung sehr klein gehalten werden. Daher genügt zur Anzeige schon ein Fluß des Mediums in so geringer Menge, daß das zuvor erwärmte Medium gegen zunächste noch kühles Medium zwischen den Wärmeübergangsflächen ausgetauscht wird und letzteres an der Temperatursonde einen vorübergehenden Temperaturabfall so lange erzeugt, bis das anschließend wieder stillstehende Medium auf die Temperatur der Wärmeübergangsfläche des Heizelements aufgeheizt worden ist. In jedem Fall ermöglichen diese Temperaturabfälle eine sichere Flußüberwachung selbst in geringsten Flußmengen.

Eine hinsichtlich der unteren Grenze der noch meßbaren Mediummenge besonders vorteilhafte Ausführungsform der Erfindung ist dadurch gekennzeichnet, daß die Temperatursonde und das Heizelement thermisch isoliert in der Leitungswand so angeordnet sind, daß sie mit ihren Wärmeübergangsflächen bündig mit der Leitungswand abschließen oder in Richtung zur Mitte der Leitungsverengung hin aus der Leitungswand vorstehen. Im einfachsten Fall besteht die die Leitungsverengung bildende Leitungswand insgesamt aus einem die Wärme gut isolierenden Werkstoff, so daß Beeinflussungen der Temperatursonde durch das Heizelement mittelbar über die Leitungswand vermieden werden. Bei einer die Leitungsverengung bildenden Leitungswand aus die Wärme gut leitendem Werkstoff ist dagegen zumindest die Temperatursonde vorzugsweise von einem Isolierkörper umgeben, dessen die Leitungsverengung begrenzende Außenfläche zwischen der Temperatursonde und der gut wärmeleitenden Wand größere Abmessungen als der Abstand zwischen den Wärmeübergangsflächen der Temperatursonde und dem Heizelement aufweist. Dadurch wird erreicht, daß der direkte Wärmefluß vom Heizelement auf die Temperatursonde durch das Medium hindurch wesentlich größer als der Nebenschluß des Wärmeflusses über die Leitungswand ist, so daß letzterer Wärmefluß vernachlässigt werden kann. Statt dessen oder ergänzend besteht für die Ausschaltung solcher störender Wärmeflüsse über die Leitungswand auch die Möglichkeit, daß die sich gegenüber liegenden Wärmeübergangsflächen der Temperatursonde und des Heizelements geringeren Abstand voneinander aufweisen als ihre Abmessungen in Flächenrichtung. Dadurch ergibt sich zwischen beiden Wärmeübergangsflächen ein überwiegend homogenes Feld des Temperaturgradienten und damit ein homogener Wärmestrom zwischen beiden Wärmeübergangsflächen, demgegenüber durch Randeffekte entstehende Wärmeflüsse über die Leitungswand vernachlässigt werden können.

Im einzelnen besteht die Möglichkeit, daß die Leitungsverengung spaltförmigen Querschnitt besitzt und die im wesentlichen ebenen Wärmeübergangsflächen des Heizelementes und der Temperatursonde in den sich in Richtung der Spaltweite gegenüber liegenden Spaltflächen angeordnet sind. Jedoch kann die Leitungsverengung im Rahmen der Erfindung selbstverständlich auch etwa kreisförmigen Querschnitt aufweisen, wobei sich dann allerdings empfiehlt, daß das Heizelement und die Temperatursonde mit ihren Wärmeübergangsflächen in den Leitungsquerschnitt mehr oder weniger vorstehen, um den lichten Strömungsquerschnitt der Leitungsverengung und damit die minimal noch erfaßbare Flußmenge weiter zu verringern.

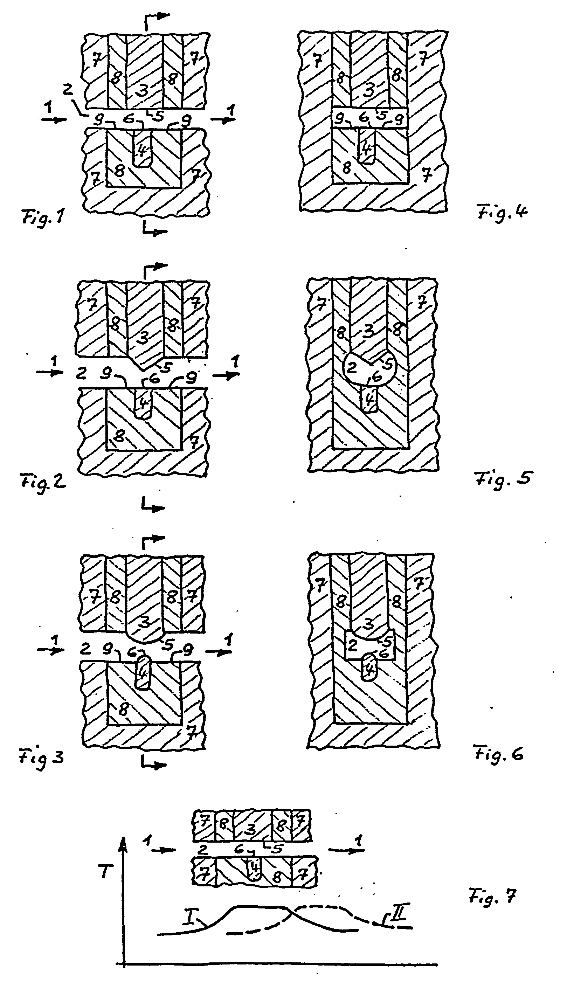

Im folgenden wird die Erfindung an in der Zeichnung im wesentlichen schematisch dargestellten Ausführungsbeispielen näher erläutert; die Fig. 1 bis 3 zeigen Längsschnitte durch verschiedene Ausführungsformen erfindungsgemäßer Flußwächter, die Fig. 4 bis 6 jeweils einen Querschnitt durch die Gegenstände der Fig. 1 bis 3. Die Fig. 7 ist eine Schemazeichnung zur Erläuterung der Funktionsweise der Erfindung.

Die in der Zeichnung schematisch dargestellten Flußwachter dienen zur Überwachung eines in Richtung der Pfeile 1 diskontinuierlich in jeweils nur kleinen Mengen fließenden Mediums, z.B. eines Schmiermittels. In dem im übrigen nicht dargestellten Leitungszug für das Medium liegt eine Leitungsverengung 2, in der das Medium durch ein Heizelement 3 erwärmt und die Temperatur des Mediums durch eine Temperatursonde 4, beispielsweise einen NTC-Widerstand oder dergl., erfaßt wird. Die elektrischen Anschlüsse für das Heizelement 3 und die Temperatursonde 4 sind der Einfachheit wegen nicht dargestellt. Das Heizelement 3 und die Temperatursonde 4 liegen sich in der Leitungsverengung 2 mit jeweils mit dem Medium in Berührung stehenden Wärmeübergangsflächen 5, 6 im wesentlichen quer zur Fließrichtung des Mediums (Pfeile 1) gegenüber. Soweit die die Leitungsverengung 2 bildende Leitungswand 7 nicht selbst aus thermisch isolierendem Werkstoff besteht, sind das Heizelement 3 und die Temperatursonde 4 gegen die Leitungswand 7 thermisch so isoliert, daß ein Wärmefluß zwischen dem Heizelement 3 und der Temperatursonde 4 über die Leitungswand 7 wesentlich kleiner ist als der direkte Wärmefluß vom Heizelement 3 zur Temperatursonde 4 durch das in der Leitungsverengung 2 befindliche Medium.

Im einzelnen sind die Temperatursonde 4 und das Heizelement 3 thermisch isoliert in der Leitungswand 7 so angeordnet, daß sie mit ihren Wärmeübergangsflächen 5, 6 bündig mit der Leitungswand 7 abschließen (Fig. 1, 4) oder in Richtung zur Mitte der Leitungsverengung 2 hin aus der Leitungswand 7 vorstehen (Fig. 3, 6). Das Raumvolumen in der Leitungsverengung 2 zwischen den Wärmeübergangsflächen 5, 6 darf nicht wesentlich größer oder sollte sogar besser kleiner sein als das Volumen der jeweils fließenden kleinsten Menge des Mediums, die noch erfaßt werden soll.

In den Ausführungsbeispielen nach den Fig. 1 und 3 besteht die die Leitungsverengung 2 bildende Leitungswand 7 im wesentlichen aus einem die Wärme gut leitenden Werkstoff, beispielsweise Metall. Das Heizelement 3 und die Temperatursonde 4 sind jeweils von einem Isolierkörper 8 umgeben. Bei dem die Temperatursonde 4 umgebenden Isolierkörper 8 ist dessen die Leitungsverengung begrenzende Außenfläche 9 zwischen der Temperatursonde 4 einerseits und der gut wärmeleitenden Wand 7 andererseits überall von größerer Abmessung als der Abstand zwischen den Wärmeübergangsflächen 5, 6 der Temperatursonde und dem Heizelement. Dadurch wird sichergestellt, daß die Temperatursonde 4 praktisch nicht von der gut wärmeleitenden Leitungswand 7 her thermisch beeinflußt werden kann. Aus dem gleichen Grunde ist im Ausführungsbeispiel nach den Fig. 1, 4 die Anordnung so getroffen, daß die sich gegenüber liegenden Wärmeübergangsflächen 5, 6 der Temperatursonde und des Heizelementes geringeren Abstand voneinander aufweisen, als ihre Abmessungen in Flächenrichtung betragen.

Im Ausführungsbeispiel nach den Fig. 1, 4 besitzt die Leitungsverengung 2 einen im wesentlichen spaltförmigen Querschnitt. Die im wesentlichen ebenen Wärmeübergangsflächen 5, 6 des Heizelements 3 und der Temperatursonde 4 befinden sich in den sich in Richtung der Spaltweite gegenüber liegenden Spaltflächen. In den Ausführungsbeispielen nach den Fig. 2 bis 6 dagegen besitzt die Leitungsverengung 2 einen etwa kreisförmigen Querschnitt. Das Heizelement 3 und die Temperatursonde 4 ragen mit ihren Wärmeübergangsflächen 5, 6 in den Leitungsquerschnitt vor und verringern dadurch zusätzlich den Strömungsquerschnitt und damit die noch erfaßbare kleinste Menge des Mediums.

In Fig. 7 is entlang der Abszisse die Abmessung der Leitungsverengung 2 in der Fließrichtung (Pfeil 1) aufgetragen, entlang der Ordinate die Temperatur des Mediums. Steht das Medium in der Leitungsverengung 2 still, so nimmt es die Temperatur an der Wärmeübergangsfläche 5 des Heizelementes 3 an, während in Fließrichtung davor und dahinter die Mediumtemperatur abnimmt. Man erhält etwa die Temperaturverteilungskurve I. Erfolgt ein vorübergehender Mediumfluß, besitzt das Medium unmittelbar nach erneutem Stillstand die durch die Kurve II angedeutete Temperaturverteilung. Die erwärmte Mediummenge hat sich in Fließrichtung, in Fig. 7 also nach rechts verschoben, wodurch Medium geringerer Temperatur in den Bereich zwischen beiden Wärmeübergangsflächen 5, 6 des Heizelements und der Temperatursonde nachgeflossen ist, so daß die Temperatursonde 4 einen Temperaturabfall anzeigt. Während des weiteren Stillstands wird das Medium in diesem Bereich wieder aufgeheizt, bis sich wieder die Temperaturverteilungskurve I im Medium einstellt. Ersichtlich ergeben sich deutlich meßbare Temperaturerniedrigungen an der Temperatursonde 4 immer dann, wenn durch den Fluß des Mediums dieses in der Leitungsverengung 2 zwischen den beiden Wärmeübergangsflächen 5, 6 um wenigstens deren Abmessung in Fließrichtung verschoben wird. Diese Verschiebung kann, wie die Fig. 7 erkennen läßt, gering sein. Ebenso kann der Querschnitt der Leitungsverengung 2 sehr klein gehalten werden, so daß aus beiden sich ein sehr geringes Volumen für die noch erfaßbare minimale Mediummenge ergibt. Im übrigen gilt selbstverständlich die Voraussetzung, daß das Heizelement das in der Verengung stillstehende Medium auf eine Temperatur erwärmt, die deutlich höher als die allgemeine Umgebungstemperatur des Flußwächters ist, weil anderenfalls beim Fließen des Mediums kein kühleres Medium in die Verengung nachströmen könnte.

**Patentansprüche**

1. Flußwächter für ein diskontinuierlich in jeweils nur kleinen Mengen fließendes Medium, z.B. Schmierstoff, mit einer im Leitungszug für das Medium liegenden Leitungsverengung (2), einem das Medium in der Leitungsverengung erwärmenden Heizelement (3) und einer die Temperatur des Mediums erfassenden Temperatursonde (4), dadurch gekennzeichnet, daß das Heizelement (3) und die Temperatursonde (4) sich in der Leitungsverengung mit jeweils mit dem Medium in Berührung stehenden Wärmeübergangsflächen (5, 6) im wesentlichen quer zur Fließrichtung (Pfeil 1) des Mediums gegenüber liegen und gegen die die Leitungsverengung (2) bildende Leitungswand (7) thermisch so isoliert sind, daß ein Wärmefluß zwischen dem Heizelement (3) und der Temperatursonde (4) über die Leitungswand (7) wesentlich kleiner ist als der direkte Wärmefluß vom Heizelement (3) zur Temperatursonde (4) durch das in der Leitungsverengung (2) befindliche Medium, und daß das Raumvolumen in der Leitungsverengung (2) zwischen den Wärmeübergangsflächen (5, 6) nicht wesentlich größer ist als das Volumen der bei einem der diskontinuierlichen Fließvorgänge transportierten kleinsten Menge des Mediums, die noch erfaßt werden soll.

2. Flußwächter nach Anspruch 1, dadurch gekennzeichnet, daß die Temperatursonde (4) und das Heizelement (3) thermisch isoliert in der Leitungswand (7) so angeordnet sind, daß sie mit ihren Wärmeübergangsflächen (5, 6) bündig mit der Leitungswand (7) abschließen oder in Richtung der Mitte der Leitungsverengung (2) hin aus der Leitungswand (7) vorstehen.

3. Flußwächter nach Anspruch 1 oder 2, dadurch gekennzeichnet, daß bei einer die Leitungsverengung (2) bildenden Leitungswand (7) aus die Wärme gut leitendem Werkstoff zumindest die Temperatursonde (4) von einem Isolierkörper (8) umgeben ist, dessen die Leitungsverengung (2) begrenzende Außenfläche (9) zwischen der Temperatursonde (4) und der gut wärmeleitenden Wand (7) größere Abmessungen als der Abstand zwischen den Wärmeübergangsflächen (5, 6) der Temperatursonde (4) und dem Heizelement (3) aufweist.

4. Flußwächter nach einem der Ansprüche 1 bis 3, dadurch gekennzeichnet, daß die sich gegenüber liegenden Wärmeübergangsflächen (5, 6) der Temperatursonde (4) und des Heizelements (3) geringeren Abstand voneinander aufweisen, als ihre Abmessungen in Flächenrichtung betragen.

5. Flußwächter nach einem der Ansprüche 1 bis 4, dadurch gekennzeichnet, daß die Leitungsverengung (2) spaltförmigen Querschnitt besitzt und die im wesentlichen ebenen Wärmeübergangsflächen (5, 6) des Heizelements (3) und der Temperatursonde (4) in den sich in Richtung der Spaltweite gegenüber liegenden Spaltflächen angeordnet sind.

6. Flußwächter nach einem der Ansprüche 1 bis 3, dadurch gekennzeichnet, daß die Leitungsverengung (2) etwa kreisförmigen Querschnitt aufweist und das Heizelement (3) und die Temperatursonde (4) mit ihren Wärmeübergangsflächen (5, 6) in den Leitungsquerschnitt vorstehen.

## Revendications

1. Contrôleur d'écoulement pour fluide s'écoulant de façon discontinue seulement en de faibles quantités, par exemple un lubrifiant, comportant un rétrécissement (2) ménagé dans une conduite véhiculant le fluide, un élément chauffant (3) chauffant le fluide dans le rétrécissement de la conduite, en une sonde de température (4) détectant la température du fluide, caractérisé en ce que l'élément chauffant (3) et la sonde de température (4) sont situés en vis-à-vis l'un de l'autre dans le rétrécissement de la conduite, avec des surfaces de transfert thermique (5, 6) placées respectivement en contact avec le fluide et orientées sensiblement transversalement par rapport à la direction d'écoulement (flèche 1) du fluide, et sont isolées thermiquement par rapport à la paroi (7) de la conduite, qui forme le rétrécissement (2), de manière qu'un flux thermique circulant entre l'élément chauffant (3) et la sonde de température (4) en passant par la paroi (7) de la conduite est nettement inférieur au flux thermique direct transmis de l'élément chauffant (3) à la sonde de température (4) à travers le fluide situé dans le rétrécissement (2) de la conduite, et que le volume de l'espace présent dans le rétrécissement (2) de la conduite entre les surfaces de transfert thermique (5, 6) n'est pas très supérieur au volume de la quantité de fluide la plus faible qui est transférée au cours de l'un des processus d'écoulement discontinus et doit encore être détectée.

2. Contrôleur d'écoulement selon la revendication 1, caractérisé en ce que la sonde de température (4) et l'élément chauffant (3) sont disposés en étant thermiquement isolés dans la paroi (7) de la conduite de manière que leurs surfaces de transfert thermique (5, 6) se terminent de niveau avec la paroi (7) de la conduite on font saillie à partir de cette paroi (7) en direction du centre du rétrécissement (2) de la conduite.

3. Contrôleur d'écoulement selon la revendication 1 ou 2, caractérisé en ce que, dans le cas où une paroi (7) de la conduite, qui délimite le rétrécissement (2) de cette dernière, est réalisée en un matériau bon conducteur de la chaleur, au moins la sonde de température (4) est entourée par un corps isolant (8), dont la surface extérieure (9), qui limite le rétrécissement (2) de la conduite, possède, entre la sonde de température (4) et la paroi (7) conduisant bien la chaleur, des dimensions supérieures à la distance entre les surfaces de transfert thermique (5, 6) de la sonde de température (4) et de l'élément chauffant (3).

4. Contrôleur d'écoulement selon l'une des revendications 1 à 3, caractérisé en ce que les surfaces de transfert thermique (5, 6), qui sont situées en vis-à-vis, de la sonde de température (4) et de l'élément chauffant (3) sont séparées par une distance inférieure à leurs dimensions dans la direction de ces surfaces.

5. Contrôleur d'écoulement selon l'une des revendications 1 à 4, caractérisé en ce que le rétrécissement (2) de la conduite possède une section transversale en forme de fente et que les surfaces sensiblement planes de transfert thermique (5, 6) de l'élément chauffant (3) et de la sonde de température (4) sont situées dans les surfaces de la fente, qui sont disposées en vis-à-vis dans la direction de la largeur de cette fente.

6. Contrôleur d'écoulement selon l'une des revendications 1 à 3, caractérisé en ce que le rétrécissement (2) de la conduite possède une section transversale approximativement circulaire et que l'élément chauffant (3) et la sonde de température (4) font saillie, par leurs surfaces de transfert thermique (5, 6), dans la section transversale de la conduite.

## Claims

1. Flow monitor for a medium flowing in a discontinuous manner, in only small quantities at a time, e.g. lubricant, having a conduit narrowing (2) in the conduit passage for the medium, a heating element (3) for heating the medium in the conduit narrowing, and a temperature probe (4) for detecting the temperature of the medium, characterised in that the heating element (3) and the temperature probe (4) are located opposite one another in the conduit narrowing with a respective heat transfer surfaces (5, 6) in contact with the medium substantially transverse to the flow direction (arrow 1) of the medium, and against which heat transfer surfaces the conduit wall (7) forming the conduit narrowing (2) is thermally insulated in such a manner that heat flow between the heating element (3) and the temperature probe (4) via the conduit wall (7) is substantially smaller than the direct heat flow from the heating element (3) to the temperature probe (4) through the medium present in the conduit narrowing (2), and in that the capacity in the conduit narrowing (2) between the heat transfer surfaces (5, 6) is slightly larger than the volume of the smallest quantity of medium transported in one of the discontinuous flow processes, which is still to be detected.

2. Flow monitor according to claim 1, characterised in that the temperature probe (4) and the heating element (3) are so mounted, thermally insulated, in the conduit wall (7), that their heat transfer surfaces (5, 6) join the conduit wall (7) in a flush manner or project from the conduit wall (7) in the direction of the centre of the conduit narrowing (2).

3. Flow monitor according to claim 1 or 2, characterised in that in a conduit wall (7) forming the conduit narrowing (2) and composed of a material which is a good conductor of heat, at least the temperature probe (4) is surrounded by an insulating body (8), whose outer face (9) defining the conduit narrowing (2) has larger dimensions between the temperature probe (4) and the wall (7) which is a good heat conductor than the distance between the heat transfer surfaces (5, 6) of the temperature probe (4) and the heating element (3).

4. Flow monitor according to one of claims 1 to 3, characterised in that the mutually opposite heat transfer surfaces (5, 6) of the temperature probe (4) and of the heating element (3) have a distance from one another which is smaller than their dimensions in the surface direction.

5. Flow monitor according to one of claims 1 to 4, characterised in that the conduit narrowing (2) has a slot-like cross-section and the substantially plane heat transfer surfaces (5, 6) of the heating element (3) and of the temperature probe (4) are arranged in the slot faces which are mutually opposite in the direction of the slot width.

6. Flow monitor according to one of claims 1 to 3, characterised in that the conduit narrowing (2) has an approximately circular cross-section and the heat transfer surfaces (5, 6) of the heating element (3) and the temperature probe (4) project into the conduit cross-section.

EP 0 270 161 B1

Fig.1

Fig.2

Fig.3

Fig.4

Fig.5

Fig.6

Fig.7

1